# EUROPEAN PATENT APPLICATION

(11) **EP 1 589 241 A1**
(43) Date of publication of application: **26.10.2005**
(21) Application number: 04706794.7
(22) Date of filing: 30.01.2004
(51) Int. Cl.: F16C 33/34, F16C 33/48, F16C 33/62, F16H 3/44, F04B 39/00, F04B 27/08

(54) **NEEDLE BEARING, SHAFT, COMPRESSOR FOR CAR AIR-CONDITIONER, AND PLANETRARY GEAR MECHANISM FOR AUTOMATIC SPEED CHANGER**

(30) Priority: 31.01.2003 JP 2003024344; 17.06.2003 JP 2003171905; 29.09.2003 JP 2003337032
(71) Applicant: NSK Ltd., Shinagawa-ku, Tokyo 141-8560 (JP)
(72) Inventor: YOSHIBA, Takeyuki NSK Ltd., Fujisawa-shi, Kanagawa 251-0021 (JP); FUJINAMI, Makoto NSK Ltd., Fujisawa-shi, Kanagawa 251-0021 (JP)
(74) Representative: Shanks, Andrew
(86) International application number: PCT/JP2004/000898
(87) International publication number: WO 2004/067979

(57) **Abstract**

In thrust needle bearings 16A and 16B, radial needle bearings 15A and 15B, and a shaft 14, each part is treated to have a nitrogen concentration of 0.3 weight % or more, and a Vickers hardness of Hv = 653 to 832. Therefore, abrasion of the contacting portions is minimal, and it is possible to suppress premature abrasion, and extend the life, even if used under severe lubrication conditions.

## Description

### TECHNICAL FIELD

The present invention relates to a needle bearing and a shaft, suitable for use in a compressor for a car air-conditioner, or in a planetary gear mechanism for an automatic transmission, and the like.

### BACKGROUND ART

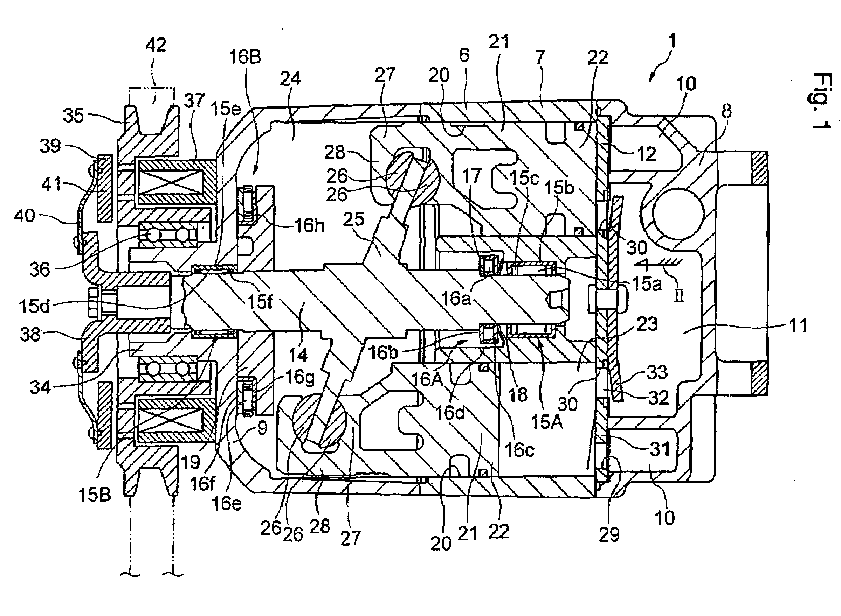

For example, as one type of compressor for a car air-conditioner (also called a car cooler compressor) there is known a variable capacity compressor (refer to Japanese Unexamined Patent Publication No. 2002-266754). Generally, in the variable capacity compressor, a drive shaft is rotatably supported with respect to a housing, using a radial bearing, and a swash plate (refer to FIG. 1, ref. num. 25a in the above Publication) is connected to this drive shaft with a variable tilt angle, and an oscillating plate (refer to FIG 1, ref. num. 49 in the above Publication) is slidably attached to this swash plate. A thrust bearing (refer to FIG. 1, ref. num. 50 in the above Publication) is placed between the swash plate and the slide plate. The ends of a plurality of piston rods are attached to the oscillating plate at equal intervals around the circumferential direction. The other ends of these piston rods arc connected to pistons. These pistons are slidably provided within cylinders that are provided in the housing, so that a refrigerant gas flowing into bores of these cylinders is compressed and discharged. Specifically, when the shaft of the compressor rotates, the oscillating plate moves as if it swings using an intersection of the shaft centerline and the center of the oscillating plate as a fulcrum. As a result, the pistons move together with the tip edge of the oscillating plate in the bearing direction of the compressor. In this manner, if the swash plate rotates, the oscillating plate makes the pistons reciprocate in the axial direction via the piston rods, so that one piston comes into the cylinder when the other piston goes out from the cylinder, thus compressing and discharging the refrigerant gas.

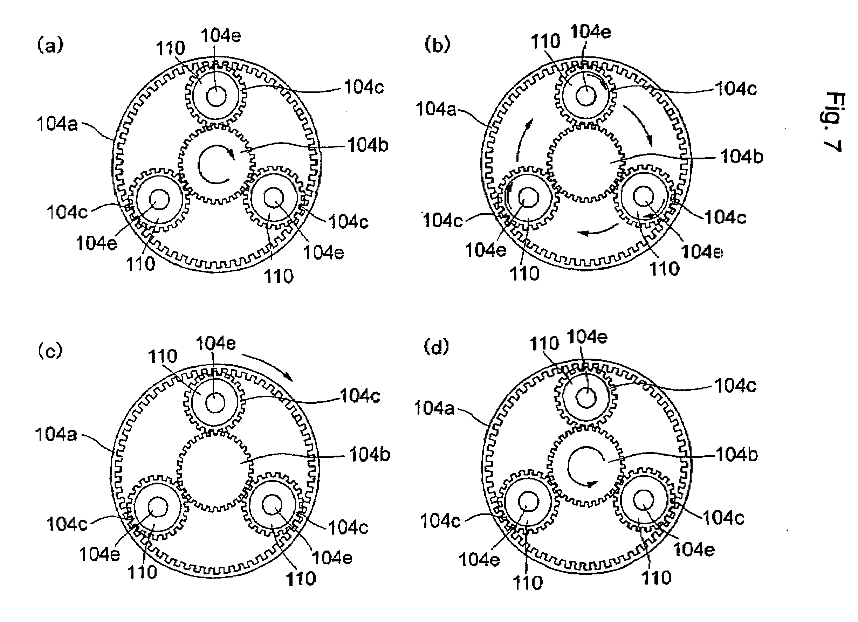

When the compressor for a car air-conditioner is operated, the drive shaft supports a large force via the swash plate. Therefore, a thrust bearing which supports the drive shaft with respect to the housing in the thrust direction, and a radial bearing which supports it in the radial direction are required. In each case, a needle bearing having needle-shaped cylindrical rollers may be used (refer to FIG. 7, ref. num. 15a and 15b in the Publication).

A general compressor for a car air-conditioner is rotated by the vehicle propulsion engine. The force due to the crank rotation is transferred to the drive shaft by rotational motion through an electromagnetic clutch via a belt. The number of revolutions spans a wide range from low-speed rotation such as at idling, to high-speed rotation such as at the time of acceleration. Furthermore the capacity of the compressor varies as necessary. Therefore, the general compressor for a car air-conditioner is operated in a state where the number of revolutions and the load are complexly combined. Since it is used in such an environment, the thrust needle bearing and the radial needle bearing used for the general compressor for a car air-conditioner are also similarly operated in a wide range of conditions from high-speed rotation to low-speed rotation, and further from the no-load condition to the heavy-load condition. In addition, since the part in which these needle bearings are used is the compressor for a car air-conditioner, a large amount of lubricant cannot be supplied to these needle bearings from outside. Therefore, it can be said that these needle bearings operate under very severe conditions from the viewpoint of ensuring the lubrication properties.

On the other hand, for the roller, the bearing ring, the cage, and the like of the general needle bearing, heat treatment of quenching and tempering is performed on a normal bearing steel (generally SUJ2). If such a needle bearing is applied to a compressor for a car air-conditioner under working conditions where the lubrication properties are not sufficiently ensured, there is concern of early abrasion due to a defective oil film on the contacting portions. Furthermore, in order to sufficiently ensure the lubrication properties, it is necessary to form a lubricating oil supply route having a sufficient cross-sectional area in the compressor housing, which increases the production cost of the compressor housing, and increases the size of the housing.

Similar problems occur in recent planetary gear mechanisms for automatic transmissions which require high-speed rotation.

In Japanese Unexamined Patent Publication No. 2002-364648 it is described that nitrided layers of 0.2 to 0.8 weight% nitrogen concentration are formed on; rolling elements, an outer ring, and an inner ring of a rolling bearing, so as to have a surface hardness of Vickers hardness Hv from 1200 to 1500, which is effective to suppress the abrasion of the rolling bearing. However, such rolling bearings are used for machine tools and the like. These have lenient lubrication conditions compared to the compressor for a car air-conditioner, and hence differ from the concept of the present invention.

The present invention takes the above problems into consideration with an object of providing a needle bearing and a shaft, which can reduce the abrasion of contacting portions, and a compressor for a car air-conditioner, and a planetary gear mechanism for an automatic transmission using these.

### DISCLOSURE OF THE INVENTION

The needle bearing of a first aspect of the present invention comprises; rollers, bearing rings, and a cage, wherein at least one of these parts has a nitrogen concentration of 0.3 weight % or more, and a Vickers hardness of Hv = 653 to 832.

The needle bearing of a second aspect of the present invention has rollers, and bearing rings, wherein at least one of these parts is subjected to superfinishing so as to have a surface roughness of Ra 0,1µm or less.

The shaft of a third aspect of the present invention is a shaft which supports a needle bearing comprising rollers and a cage, wherein at least a surface where the rollers of the needle bearing are rolled, has a nitrogen concentration of 0.3 weight % or more, and a Vickers hardness of Hv = 653 to 832.

In the present invention, the bearing ring also includes a ring gear and a pinion shaft in a planetary gear mechanism.

In the needle bearing of the first aspect of the present invention, if nitrogen is added on the surface of at least one of the rollers, the bearing rings, and the cage by such treatment as carbonitriding, so as to have a surface nitrogen concentration of 0.3 weight % or more, then the tempering resistance is improved, the strength at high temperature is increased, the abrasion resistance is improved, and a large amount of retained austenite which is effective for preventing exfoliation originated at an indentation, can exist in the outermost layer. If the surface nitrogen concentration is below 0.3 weight %, the strength at high temperature is decreased, and the abrasion resistance is decreased. Therefore the lower limit is set 0.3 weight %. If the surface nitrogen concentration exceeds 0.8 weight %, grinding finish becomes difficult during production of the bearing, so that the productivity of the bearing is decreased due to the difficulty in the grinding. Therefore, the upper limit is preferably 0.8 weight %.

Examples of formation methods of a nitrided layer (a layer having an appropriate nitrogen concentration and hardness) include; liquid nitriding treatment by a salt bath or the like, gas nitriding treatment, and ion nitriding treatment. In the ion nitriding treatment, the processing temperature is relatively high so that sufficient hardness of the substrate may be difficult to obtain even considering the heat resistance of the base material, and in some cases a uniform nitrided layer may be difficult to form on the surface of the at least one part. Therefore, the liquid nitriding treatment or the gas nitriding treatment is preferable.

The nitriding temperature is preferably 480°C or less. Particularly if the processing temperature is high, the nitrided layer may have a filmy fragile compound layer of about a few microns (pseudo ceramic layer composed of a single phase of ξ phase or ε phase) formed on the outermost surface in some cases. Therefore, the nitriding temperature is more preferably 460°C or less. Moreover, as the processing temperature becomes lower, the nitrided layer becomes denser, keeping the inferior porous layer from occurring.

Furthermore, the present invention is vastly different from the technique described for example in Japanese Unexamined Patent Publication No. 2002-364648, in the point where the at least one part has a surface hardness of Vickers hardness Hv = 653 to 832. That is, the rolling elements, the outer ring, or the inner ring described in Japanese Unexamined Patent Publication No. 2002-364648 have a surface hardness of Vickers hardness Hv1200 to 1500, so as to suppress abrasion. However, in the needle bearing for use in a compressor for a car air-conditioner, since the lubrication conditions are more severe, premature abrasion is generated from the surface exfoliation caused by metal contact, in many cases. Therefore, in the present invention, the surface hardness of the at least one part is decreased to the Vickers hardness of Hv = 653 to 832 so as to increase the toughness, so that aggression against the mating member is suppressed, to thereby suppress premature abrasion.

Regarding the needle bearing of the second aspect of the present invention, at least one of the roller or the bearing ring is subjected to superfinishing so as to have a surface roughness of Ra 0.1µm or less, so that the occurrence of abnormal abrasion can be suppressed. Conventionally, the rollers for a needle bearing which is used for the compressor for a car air-conditioner, or the planetary gear mechanism for an automatic transmission of a vehicle, are formed by cutting a wire rod which becomes the base material, then subjecting this to heat treatment, and grinding the outside diameter surface thereof. The roughness of the outside diameter surface of the roller is suitably finished mainly by grinding and barrel finishing. However, if such a roller is used, very hard particles such as alumina, silica, or the like being the media for barrel finishing, may remain on the rolling contact surface of the roller. Therefore, if a needle bearing incorporating such rollers, or a sole roller is used for an apparatus wherein the lubrication conditions are very severe such as a compressor for a car air-conditioner or a planetary gear mechanism for an automatic transmission, there is concern a for a case where the raceway surface or the rolling contact surface of the roller is abnormally abraded due to the effect of the very hard particles.

In order to solve such problems, it can be considered to barrel finish the rollers, the bearing rings, and the cage using a media for barrel finishing which is a low-hardness material coated with a high-hardness material. However, in such a processing method, hard materials such as alumina is used as little as possible. Therefore, when barreling for applying the crowning, and barrel finishing for removing the hard foreign matter adhered to the barrel, several barrel finishing steps are necessary. Particularly at the final barreling step, it is necessary to decrease the grinding force for finishing. Therefore, the processing time is extended in order to obtain an appropriate surface roughness, which is disadvantageous in terms of cost.

The present invention takes the above problems into consideration, and in order to decrease the presence of the barreling media as being the hard foreign matter such as alumina, between the roller and the bearing ring, while ensuring the roughness of the roller and the bearing ring, superfinishing is applied as a final step after surface grinding (alternatively, grinding + barrel finishing), so as to give a surface roughness of Ra 0.1µm or less.

According to the present invention, processing which removes the barreling media, being a factor of the residual hard foreign matter, can be realized by using superfinishing. Therefore, it becomes possible to also crown the roller at the same time while remarkably improving the roughness, so that there is also an advantage with respect to the barrel finishing in terms of cost. Moreover, by making the surface roughness of Ra 0.1 µm or less, then in the case where this is subjected to carbonitriding, it becomes possible to weaken the aggression against the surface of the mating member which the nitrided layer surface contacts.

Furthermore, by subjecting at least one of the rollers or the raceways to superfinishing, so as to make the surface roughness between Ra 0.01µm and 0.04µm, the abovementioned effect can be further demonstrated.

The shaft of the third aspect of the present invention is a shaft which supports the needle bearing, wherein at least a surface on which the rollers of the needle bearing are rolled, has a nitrogen concentration of 0.3 weight % or more, and a Vickers hardness of Hv = 653 to 832. Therefore it is possible to suppress abrasion of the abovementioned contacting portions.

### BRIEF DESCRIPTION OF THE DRAWINGS

FIG. 1 is a cross-sectional view of a compressor for a car air-conditioner fitted with a needle bearing according to an embodiment of the present invention.
FIG. 2 shows the structure of FIG. 1 seen from the direction of arrow II.
FIG. 3 is a perspective view of a thrust needle bearing 16B.
FIG. 4 is a cross-sectional view of the thrust needle bearing 16B.
FIG. 5 is a cross-sectional view of a vehicle automatic transmission to which a needle bearing according to another embodiment of the present invention is applied.
FIG 6 is an exploded view of an example of a planetary gear mechanism used in the structure of FIG 5, showing assembly conditions in the direction of the arrow.
FIG 7 (a), (b), (c), and (d) show the working principle of the planetary gear mechanism of FIG. 6, showing conditions with the gear rotated in the direction of the arrow.
FIG 8 is a cross-sectional view of the needle bearing according to an embodiment of the present invention incorporated in the planetary gear mechanism shown in FIG 5.
FIG. 9 shows shape measurement results of a roller processed by the processing method of the present invention.
FIG. 10 shows shape measurement results of a roller processed by a conventional processing method.
FIG 11 is a cross-sectional view of an example where the needle bearing of the present invention is incorporated into a thrust bearing arranged in a torque converter of a vehicle automatic transmission.

### BEST MODE FOR CARRYING OUT THE INVENTION

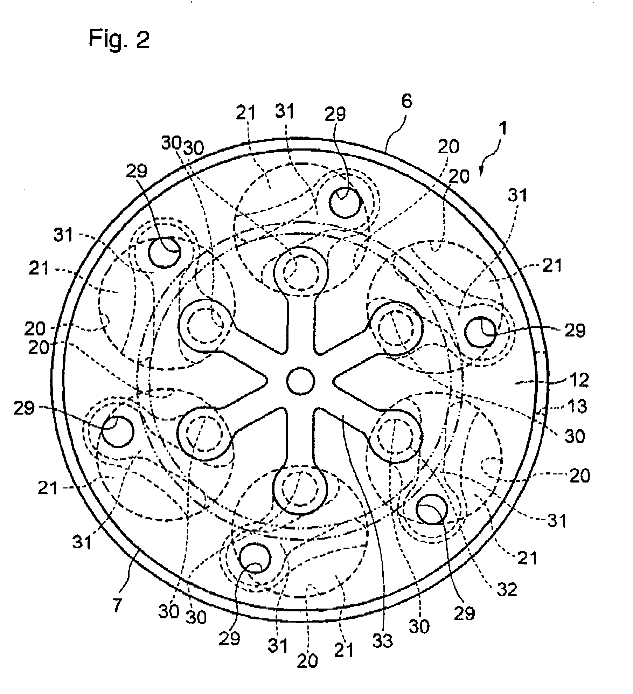

Hereunder is a description of an embodiment of the present invention, with reference to the drawings. FIG. 1 is a cross-sectional view of a compressor for a car air-conditioner installed with a needle bearing according to an embodiment of the present invention. FIG 2 is the structure of FIG 1 seen from the direction of arrow II.

In FIG 1, regarding a housing 6 which constitutes a compressor 1, a central short cylindrical main body 7 is held between a head case 8 and a swash plate case 9 from the opposite sides along the axial direction (left to right direction in FIG. 1), and combined as one body by a plurality of connecting bolts (not shown). A low pressure chamber 10 and a high pressure chamber 11 are provided inside the head case 8. The high pressure chamber 11 is of course a positive pressure, and the low pressure chamber 10 also is a positive pressure. Moreover, a tabular bulkhead plate 12 is held between the main body 7 and the head case 8. The low pressure chamber 10 which is shown as if divided into a plurality of chambers in FIG. 1, is communicably connected within itself, and communicably connected to a single suction port 13 (FIG. 2) which is provided in the external face of the head case 8. Furthermore, the high pressure chamber 11 is communicated with a discharge port (not shown) provided in the head case 8. The suction port 13 is communicably connected to the outlet of an evaporator (not shown), and the discharge port (not shown) is communicably connected to the inlet of a condenser (not shown).

A shaft 14 is rotatably supported in the housing 6, in a condition spanning between the main body 7 and the swash plate case 9. More specifically, opposite ends of the shaft 14 are rotatably supported with respect to the main body 7 and the swash plate case 9, by a pair of radial needle bearings 15A and 15B, and the thrust load applied to this shaft 14 can be supported by a pair of thrust needle bearings 16A and 16B.

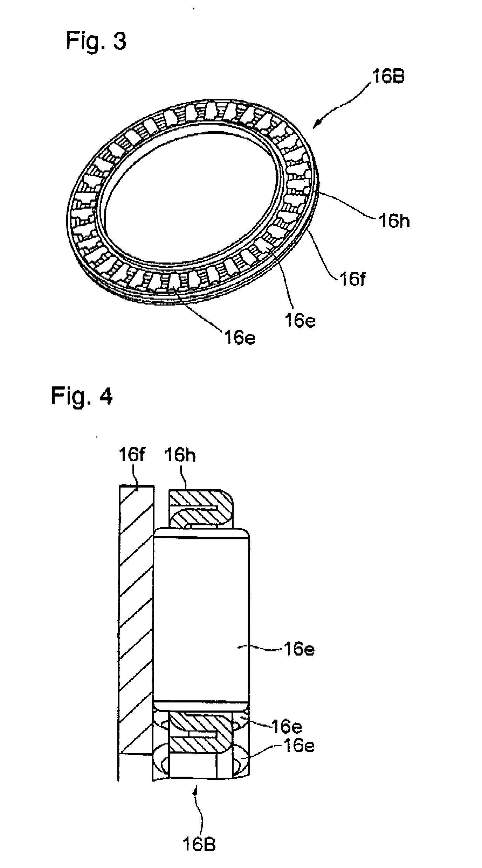

FIG. 3 is a perspective view of the thrust needle bearing 16B being disengaged of FIG. 1.

FIG 4 is a cross-sectional view passing along a roller 16e of the thrust needle bearing 16B. In FIG. 4, the bearing center is on the lower side, and the side surface of one roller 16e and the end faces of two rollers 16e are shown.

The thrust needle bearing 16B according to this embodiment has; a plurality of rollers 16e, bearing rings 16f and 16g which sandwich the rollers from either side in the axial direction (left to right direction in FIG. 1), and a cage 16h which retains the rollers 16e. The surfaces of the rollers 16e, the bearing rings 16f and 16g, and the cage 16h are treated so as to have a nitrogen concentration of 0.3 weight % or more, a Vickers hardness of Hv = 653 to 832, and a surface roughness of Ra 0.1µm or less.

The thrust needle bearing 16A according to this embodiment has a similar structure to that of the thrust needle bearing 16B.

That is, the thrust needle bearing 16A according to this embodiment has; a plurality of rollers 16a, bearing rings 16b and 16c which sandwich the rollers from either side in the axial direction (left to right direction of FIG 1), and a cage 16d which retains the rollers 16a. The surfaces of the rollers 16a, the raceways 16b and 16c, and the cage 16d are treated so as to have a nitrogen concentration of 0.3 weight % or more, a Vickers hardness of Hv = 653 to 832, and a surface roughness of Ra 0.1µm or less.

The radial needle bearing 15A according to this embodiment has; a plurality of rollers 15a, an outer ring (bearing ring) 15b, and a cage 15c which retains the rollers 15a. The surfaces of the rollers 15a, the outer ring 15b, the cage 15c, and the outer circumferential surface of the shaft 14 on which the rollers 15a are rolled, arc treated so as to have a nitrogen concentration of 0.3 weight % or more, a Vickers hardness of Hv = 653 to 832, and a surface roughness of Ra 0.1µm or less.

Furthermore, the radial needle bearing 15B according to this embodiment has; a plurality of rollers 15d, an outer ring (bearing ring) 15e, and a cage 15f which retains the rollers 15d. The surfaces of the rollers 15d, the outer ring 15e, the cage 15f and the outer circumferential surface of the shaft 14 on which the rollers 15d arc rolled, are treated so as to have a nitrogen concentration of 0.3 weight % or more, a Vickers hardness of Hv = 653 to 832, and a surface roughness of Ra 0.1µm or less.

In particular, the rollers 16a, 16e, 15a, and 15e at the final step after grinding, are subjected to superfinishing so as to finish them to have an outer circumferential surface roughness of Ra 0.1µm or less.

The thrust needle bearing 16A of FIG 1 is provided between a portion of the main body 7, and a stepped portion 17 formed on one end of the shaft 14 (right side in FIG 1) via a disc spring 18. The thrust needle bearing 16B is arranged between a disc 19 which is fixed onto the outer circumferential surface of a middle portion of the shaft 14, and the swash plate case 9.

A plurality of (six at equal intervals around circumferential direction in the example of FIG. 2) cylinder bores 20 are formed inside the main body 7 constituting the housing 6, in the portion surrounding the shaft 14. Sliding portions 22 provided on the top half portion (right half portion in FIG. 1) of the pistons 21, are respectively inserted into the inside of the plurality of cylinder bores 20 formed in the main body 7 in this manner, so as to be freely displaced in the axial direction.

Here, a space provided between the bottom of the cylinder bore 20 and the top end surface (right end surface in FIG. 1) of the piston 21 is deemed a compression space 23. Moreover, a space exiting inside the swash plate case 9 is deemed a swash plate space 24.

At a portion located inside this swash plate space 24 on the outer circumferential surface of the middle portion of the shaft 14, a swash plate 25 is fixed to the shaft 14 with a predetermined tilt angle, so that the swash plate 25 can be rotated together with the shaft 14. A plurality of places around the circumferential direction of the swash plate 25 are connected to the pistons 21 by respective pairs of sliding shoes 26. Therefore, the inner surfaces (the surfaces facing each other) of the respective sliding shoes 26 are made flat, and are sliding-contacted with the portion towards the outer diameter side of opposite side surfaces of the swash plate 25 which is also flat.

Moreover, the outer surfaces of the respective sliding shoes 26 (the opposite side surface to the mating sliding shoe 26) are made into a spherical convex surface. Furthermore, in the state with the inner surfaces contacted with the opposite side surfaces of the swash plate 25, the outer surfaces of the opposite sliding shoes 26 are located on a single spherical surface.

On the other hand, connectors 27 which constitute a driving force transfer mechanism together with the sliding shoes 26 and the swash plate 25, are formed integrally with the respective pistons 21 on the base end (the end on the side away from the bulkhead plate 12; the left end in FIG. 1) of the respective pistons 21. A retaining portion 28 for retaining the pair of the sliding shoes 26, is formed in the respective connectors 27. Moreover, a pair of spherical concavities which are in close contact with the outer surfaces of the respective sliding shoes 26, are formed in the respective retaining portions 28, facing each other.

Furthermore, a pair of guide surfaces (not shown), one pair for each piston 21, are formed spaced apart around circumferential direction, on the inner circumferential surface of part of the main body 7, being portions aligned with the outer ends of the respective connectors 27. The outer ends of the respective connector 27 are guided by these guide surfaces, so as to be displaced freely only along the axial direction of the pistons 21 (the left and right direction in FIG. 1).

Therefore, the pistons 21 in the respective cylinder bores 20, are also kept from rotating about the central axis of the piston 21, accompanying the rotation of the swash plate 25, and are fitted in the cylinder bores 20 so as to be freely displaced only in the axial direction (not rotatably). As a result, the respective connectors 27 push and pull the pistons 21 in the axial direction accompanying the oscillating displacement of the swash plate 25 caused by the rotation of the shaft 14, and reciprocate the respective sliding portions 22 in the axial direction in the cylinder bores 20.

On the other hand, suction bores 29 which communicably connect the low pressure chamber 10 and the respective cylinder bores 20, and discharge bores 30 which communicably connect the high pressure chamber 11 and the respective cylinder bores 20, are formed axially passing through the bulkhead plate 12 which is clamped between abutting portions of the main body 7 and the head case 8 so as to partition the low pressure chamber 10, the high pressure chamber 11 and the respective cylinder bores 20 from each other. Consequently, the openings on the cylinder bore 20 side being on one end (left end in FIG. 1) of the respective suction bores 29 and the respective discharge bores 30, face the top end surfaces of the respective piston 21. Moreover, a reed valve type inlet valve 31 which only lets the refrigerant gas flow from the low pressure chamber 10 towards the respective cylinder bores 20, is provided on a portion facing one end of the respective suction bores 29 in the respective cylinder bores 20.

On the other hand, a reed valve type discharge valve 32 which only lets the refrigerant gas flow from the respective cylinder bores 20 towards the high pressure chamber 11, is provided on a portion facing the opening on the other end (the right end in FIG. 1) of the respective discharge bores 30 in the high pressure chamber 11. A stopper 33 which limits the displacement in the direction away from the respective discharge bores 30 is attached to this discharge valve 32.

The shaft 14 of the compressor 1 constructed as described above is rotated by a vehicle engine (not shown) via an endless belt 42. Therefore, in the illustrated example, a driven pulley 35 is rotatably supported around a supporting cylinder 34 which is provided in the center of the outer surface (the left side surface in FIG. 1) of the swash plate case 9 constituting the housing 6, by a double-row radial ball bearing 36. This driven pulley 35 has a cross-sectional groove shape constituting an overall annular shape. A solenoid 37 fixed to the outer surface of the swash plate case 9 is arranged in an inner space of the driven pulley 35.

On the other hand, a mounting bracket 38 is fixed at the end of the shaft 14, to a portion projecting from the supporting cylinder 34. An annular plate 39 made from a magnetic material is supported around this mounting bracket 38 via a plate spring 40. When electricity is not supplied to the solenoid 37, then as shown in the figure, this annular plate 39 is separated from the driven pulley 35 due to the elasticity of the plate spring 40, while when electricity is supplied to the solenoid 37 it is attracted towards the driven pulley 35. Accordingly, the torque can be transferred from the driven pulley 35 to the shaft 14. That is, the solenoid 37, the annular plate 39, and the plate spring 40 constitute an electromagnetic clutch 41 for engaging and disengaging the driven pulley 35 and the shaft 14. Moreover, the endless belt 42 is spanned between a driving pulley fixed to the end of the crank shaft (not shown) of the vehicle engine, and the driven pulley 35.

The operation of the compressor for a car air-conditioner according to the present embodiment is described. When the car air-conditioner is operated in order to cool down or dehumidify the vehicle interior, the electromagnetic clutch 41 is operated to engage the driven pulley 35 and the shaft 14, and thereby transfer the vehicle engine power to the shaft 14 via the endless belt 42, so that the shaft 14 is rotated. As a result, the swash plate 25 is rotated, and the plurality of sliding portions 22 constituting the pistons 21 are respectively reciprocated in the cylinder bore 20. Then, accompanying this reciprocation of the sliding portions 22, the refrigerant gas drawn in from the suction port 13 is sucked from inside the low pressure chamber 10 into the compression spaces 23 through the respective suction bores 29. The refrigerant gas is compressed in the respective compression spaces 23, and is then sent out to the high pressure chamber 11 through the discharge bores 30, and discharged from the discharge ports. Then, the high temperature and high pressure refrigerant gas is cooled down by the condenser to become liquid refrigerant. After this it is rapidly expanded to become low temperature and low pressure mist refrigerant, and flows to the evaporator. Here the air to be supplied to the vehicle interior is cooled down. Then, the refrigerant becomes refrigerant gas and is sucked into the compressor.

According to this embodiment, as described above, in the thrust needle bearings 16A and 16B, the radial needle bearings 15A and 15B, and the shaft 14, each part is treated to have a nitrogen concentration of 0.3 weight % or more, and a Vickers hardness of Hv = 653 to 832. Therefore, it is possible to suppress premature abrasion, and extend the life, even if used under severe lubrication conditions.

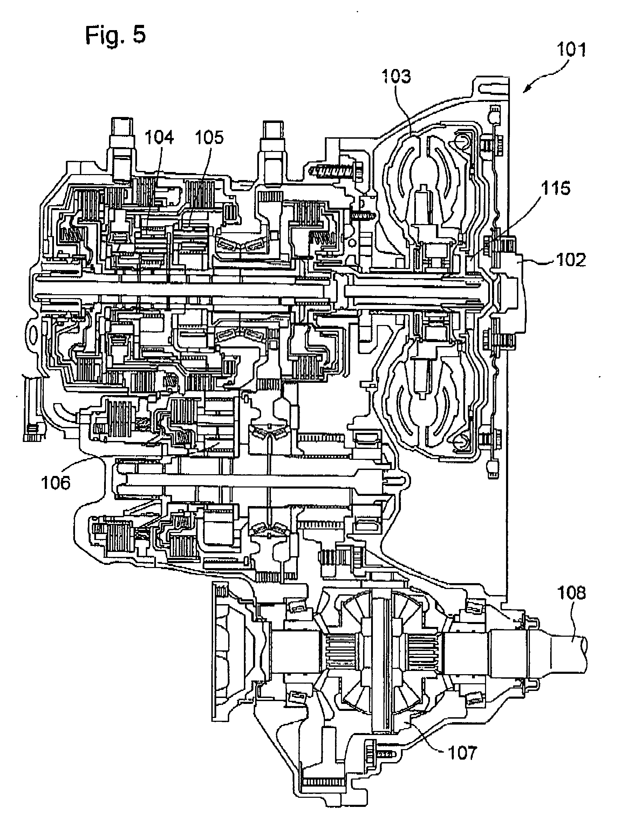

FIG 5 is a cross-sectional view of a vehicle automatic transmission 101 to which a needle bearing according to another embodiment is applied. In FIG. 5, the torque output from an engine crank shaft 102 is transferred via a torque converter 103. It is further decelerated in a plurality of stages via planetary gear mechanisms 104,105, and 106 which are combined on a plurality of rows. Then, the torque is output to a wheel (not shown) via a differential gear 107 and a drive shaft 108. The planetary gear mechanisms 104, 105, and 106 support the radial load. Moreover, the thrust load is supported by a bearing 115 or the like.

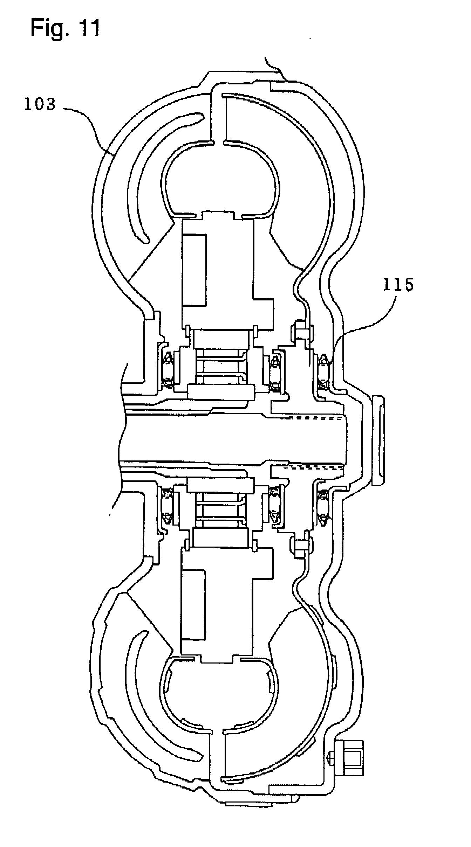

FIG. 11 shows an example where the thrust bearing 115 arranged on the engine crank shaft 102 side in FIG 5, comprises a needle bearing of the present invention.

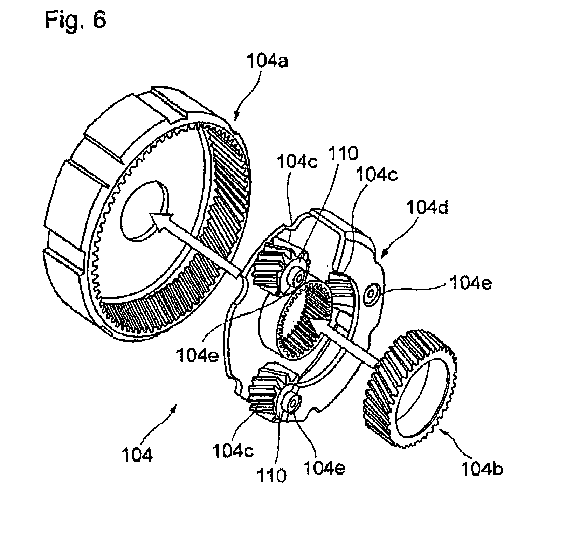

FIG. 6 is an exploded view of an example of a planetary gear mechanism 104 (the same for 105 and 106 in principle) shown in FIG 5. In FIG. 6, the planetary gear mechanism 104 has a ring gear 104a with internal teeth, a sun gear 104b with external teeth, three planetary gears 104c which mesh with the ring gear 104a and the sun gear 104b, and a carrier 104d which rotatably supports the planetary gears 104c by three pinion shafts 104e and which can itself rotate. A needle bearing 110 is provided between the planetary gear 104c and the pinion shaft 104e.

FIG. 7 (a), (b), (c), and (d) show the working principle of the planetary gear mechanism 104. Firstly, in the case of a first speed, as shown in FIG 7 (a), the sun gear (inner ring) 104b is on the driving side, the planetary gears 104c (carrier and outer ring) are on the driven side, and the ring gear 104a is fixed. As a result, a large reduction ratio is obtained. Next, in the case of a second speed, as shown in FIG. 7 (b), the sun gear 104b is fixed, the planetary gears 104c (carrier) are on the driven side, and the ring gear 104a is on the driving side. As a result, a medium reduction ratio is obtained. Furthermore, in the case of a third speed, as shown in FIG. 7 (c), the sun gear 104b is fixed, the planetary gears 104c (carrier) are on the driving side, and the ring gear 104a is on the driven side. As a result, a small reduction ratio is obtained. In the case of reversing, as shown in FIG. 7 (d), the sun gear 104b is on the driven side, the planetary gears 104c (carrier) are fixed, and the ring gear 104a is on the driving side. As a result, the output can be reversed with respect to the input. The above shows only one example of the operation of the planetary gear mechanism 104, and the operation is not necessarily limited to such operation.

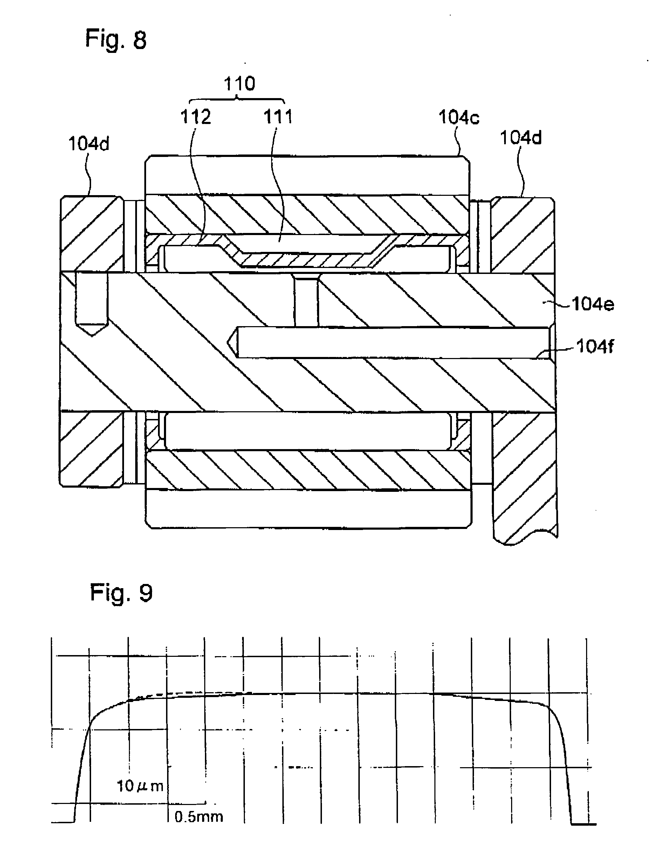

FIG. 8 shows the needle bearing 110 of this embodiment incorporated in the planetary gear mechanism. As shown in FIG. 8, the needle bearing 110 is arranged between the pinion shaft (inner ring) 104e and the planetary gear (outer ring) 104c, and rotatably supports the planetary gear 104c. The needle bearing 110 comprises a plurality of rollers 111, and a cage 112 which retains them. In the pinion shaft 104e is formed an oil passage 104f which extends along the axis from the right in FIG 8, and comes out to the outer circumferential surface at the middle. The cage 112 is used by an outer ring riding.

In the needle bearing 110 according to this embodiment, the rollers 111, the raceway surface of the pinion shaft 104e, the raceway surface of the planetary gear 104c, and the cage 112 are treated so as to have a nitrogen concentration of 0.3 weight % or more, a Vickers hardness of Hv = 653 to 832, and a surface roughness of Ra 0.1µm or less. In particular, the rollers 111 are subjected to superfinishing after grinding, so as to finish them to have an outer circumferential surface roughness of Ra 0.1 µm or less.

Hereunder are results of a first evaluation test performed by the present inventors.

### Test conditions

(1) Bearing used : Inside diameter φ30 x outside diameter φ60 x width 5 (mm)
   Thrust needle bearing
(2) Number of revolutions : 1000min⁻¹
(3) Axial load : 4000 N
(4) Lubricating oil : White kerosene
(5) Testing time : 60min

The test results under the above test conditions (relation between the nitrogen concentration, the Vickers hardness, and the roller frictional amount) are shown in Table 1.

**Table 1**

| Nitrogen Concentration (%) | Vickers Hardness (HV) | Roller Frictional Amount | Determination |
|---|---|---|---|
| 0.10 | 772 | 0.022 | × |
| 0.14 | 800 | 0.020 | × |
| 0.15 | 772 | 0.020 | × |
| 0.15 | 772 | 0.015 | × |
| 0.15 | 720 | 0.018 | × |
| 0.21 | 720 | 0.015 | × |
| 0.21 | 772 | 0.010 | Δ |
| 0.25 | 746 | 0.004 | Δ |
| 0.26 | 720 | 0.005 | Δ |
| 0.32 | 772 | 0.002 | ○ |
| 0.32 | 746 | 0.003 | ○ |
| 0.37 | 746 | 0.002 | ○ |
| 0.37 | 720 | 0.003 | ○ |

The test results under the above test conditions (relation between the nitrogen concentration, the Vickers hardness, and the roller frictional amount) are shown in Table 1.

Considering the test result, it was confirmed that, even under severe conditions using white kerosene as the lubricating oil, as long as the nitrogen concentration is 0.32 weight % or more, the roller abrasion amount can be suppressed below 0.003mm, even if the Vickers hardness is as low as Hv 720 to 772. On the other hand, it was confirmed that, if the nitrogen concentration is 0.21 weight % or less, the roller abrasion amount becomes 0.015mm or more, being a large abrasion amount. Therefore such nitrogen concentration is not suitable for practical use.

An evaluation test was performed with changing the surface roughness of the roller, five times (n=5) under the same test conditions for the respective surface roughness. The results are shown in Table 2. In the table, the double circle (ⓞ) shows "minimal friction", the single circle (○) shows "minimal abrasion", the triangle (Δ) shows "some abrasion", and x shows "much abrasion".

**Table 2**

| Surface Roughness | Test Result | | | | |
|---|---|---|---|---|---|
| | 1 | 2 | 3 | 4 | 5 |
| Ra 0.01µm | ○ | ⓞ | ○ | ○ | ○ |
| Ra 0.02µm | ○ | ⓞ | ○ | ○ | ○ |
| Ra 0.03µm | ○ | ⓞ | ○ | ○ | ○ |
| Ra 0.04µm | ○ | ⓞ | ○ | ○ | ○ |
| Ra0.05µm | ○ | ○ | ○ | ○ | ○ |
| Ra0.06µm | ○ | ○ | Δ | ○ | ○ |
| Ra 0.07µm | ○ | ○ | ○ | Δ | ○ |
| Ra 0.08µm | Δ | ○ | ○ | Δ | Δ |
| Ra 0.09µm | Δ | Δ | ○ | ○ | Δ |
| Ra 0.1µm | Δ | Δ | Δ | Δ | Δ |
| Ra 0.11µm | Δ | Δ | Δ | Δ | × |
| Ra 0.12µm | Δ | Δ | Δ | × | × |

Considering the test results, it was confirmed that, even under severe conditions using white kerosene as the lubricating oil, if the surface roughness of the rollers is more than Ra 0.01µm and less than 0.04µm, the abrasion amount is sufficiently low. Moreover, it was confirmed that, if the surface roughness of the rollers exceeds Ra 0.1µm, the abrasion amount is increased.

Hereunder are results of a second evaluation test performed by the present inventors.

### Test conditions

(1) Bearing used : Inside diameter φ40 x outside diameter φ60 x width 5 (mm)
   Thrust needle bearing
(2) Axial load : 5000N
(3) Radial load : 0 N
(4) Number of revolutions : 700min⁻¹
(4) Lubricating oil : White kerosene
(5) Testing time : 30 min

Under the above test conditions, rollers which had been subjected to the same processing as the conventional processing (barrel finishing using a media of alumina adhered walnut grit), and rollers which had been subjected to superfinishing as in the present invention to obtain an outer circumferential surface roughness of Ra 0.1µm or less, were respectively incorporated into the needle bearing to perform the test. After the test, the rollers were disassembled to measure the shape.

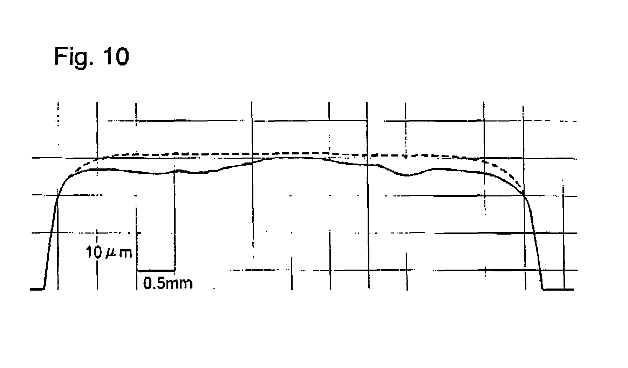

FIG 9 shows the shape measurement results of a roller processed by the processing method of the present invention. FIG 10 shows the shape measurement results of a roller processed by the conventional processing method. In the drawings, the broken line denotes the shape of the outer circumferential surface before the test, and the solid line denotes the shape of the outer circumferential surface after the test.

As is apparent from a comparison of FIG 9 and FIG 10, according to the present invention, compared to the conventional processing, it is clear that the maximum abrasion amount of the roller can be decreased to 1/6 or less. This is considered to be because the alumina, as the hard foreign matter adhered at the time of barrel finishing, is removed by the subsequent superfinishing, so that abrasion is not promoted.

While the present invention has been described above with reference to the embodiments, it should be understood that the present invention is not limited by the above embodiments, and needless to say modifications and improvements can be made without departing from the scope of the present invention.

### INDUSTRIAL APPLICABILITY

According to the present invention, it is possible to provide a needle bearing and a shaft, which can reduce the abrasion of contacting portions, and a compressor for a car air-conditioner, and a planetary gear mechanism for an automatic transmission using these.

## Claims

1. A needle bearing wherein at least one of rollers, bearing rings, and a cage has a nitrogen concentration of 0.3 weight % or more, and a Vickers hardness of Hv = 653 to 832.

2. A needle bearing wherein at least one of rollers, and bearing rings is subjected to superfinishing so as to have a surface roughness of Ra 0.1µm or less.

3. A needle bearing according to claim 2, wherein at least one of the rollers and the bearing rings is subjected to superfinishing, so as to have a surface roughness between Ra 0.01µm and 0.04µm.

4. A shaft which supports a needle bearing, wherein at least a surface on which rollers of the needle bearing arc rolled, has a nitrogen concentration of 0.3 weight % or more, and a Vickers hardness of Hv = 653 to 832.

5. A compressor for a car air-conditioner which uses a needle bearing according to any one of claim 1 through claim 3, or a shaft according to claim 4.

6. A planetary gear mechanism for an automatic transmission which uses a needle bearing according to any one of claim 1 through claim 3, or a shaft according to claim 4.
